# EUROPEAN PATENT APPLICATION

(11) **EP 3 597 033 A1**
(43) Date of publication of application: **22.01.2020**
(21) Application number: 17900923.8
(22) Date of filing: 16.03.2017
(51) Int. Cl.: A01G 7/00

(54) **PLANT-GROWING LIGHT GENERATION DEVICE, PLANT-GROWING DEVICE USING SAME, AND PLANT-GROWING METHOD**

(71) Applicant: MT Endeavour, Inc., Chiyoda-ku Tokyo 101-0025 (JP)
(72) Inventor: HONDA, Hirokazu, Omitama-shi, Ibaraki 319-0105 (JP); TAKAHASHI, Hideharu, Hitachi-shi, Ibaraki 316-0023 (JP)
(74) Representative: Strehl Schübel-Hopf & Partner
(86) International application number: PCT/JP2017/010626
(87) International publication number: WO 2018/167905

(57) **Abstract**

A plant growth lighting device that irradiates a target plant with an artificial light from the side of the target plant includes an LED circuit and an LED driving circuit. The LED circuit includes a plurality of LED elements that emit the artificial light. The LED driving circuit supplies an LED driving current to the LED circuit. The LED driving current varies in current value periodically as it has a large value during a first period and has a small value or does not flow during a second period. The artificial light varies in intensity periodically according to the LED driving current, which varies in value periodically.

## Description

### BACKGROUND OF THE INVENTION

### Field of the Invention

The present invention relates to a plant growth lighting device that emits light for growing plants and a device and a method for growing plants using the plant growth lighting device.

### Description of the Related Art

Plants growing on land or in water grow by receiving light. For example, many plants have chloroplasts, which absorb light to produce starch. The starch produced is used as an energy source for the growth of the plants and seed production. Sunlight is necessary in growing these organisms, but in some cases artificially created light (hereinafter referred to as artificial light) is used with or without sunlight to grow plants for various reasons.

Techniques related to growing plants with artificial light are disclosed in Japanese Unexamined Patent Application Publication No. 2013-21980 and Japanese Unexamined Patent Application Publication No. 2016-52280, for example. Also, a technique for irradiating plants with artificial light that periodically varies in intensity is disclosed in Japanese Unexamined Patent Application Publication No. 2016-81684.

### SUMMARY OF THE INVENTION

### Problems to be Solved by the Invention

Conventional plant growth lighting devices irradiate target plants with artificial light for growing plants only from above, as is the case with sunlight. Unfortunately, however, plants irradiated with plant growth artificial light only from above often develop stems of insufficient diameter, although they are sufficient in height. In other words, when plants are irradiated with light only from above, an inherent tendency of the plants to grow upward to receive more light than other plants leads to height elongation.

Plants produce starch mainly in their leaves by photosynthesis, but at the same time they absorb necessary ingredients through their roots. Therefore, in order to increase the harvest of a plant, it is preferable to increase the stem diameter or the number of sprouts that bear fruit.

The present invention has an object to provide a plant growth lighting device that emits artificial light suitable for increasing a harvest and a device and a method for growing plants using the plant growth lighting device.

### Means of Solving the Problems

According to a first aspect of the present invention, a plant growth lighting device that irradiates a target plant with artificial light from the side of the target plant includes an LED circuit and an LED driving circuit. The LED circuit includes a plurality of LED elements that emit the artificial light. The LED driving circuit supplies an LED driving current to the LED circuit. The LED driving current varies in current value periodically as it has a large value during a first period and has a small value or does not flow during a second period. The artificial light varies in intensity periodically according to the LED driving current, which varies in value periodically.

According to a second aspect of the present invention, in the first aspect of the present invention, the LED elements of the LED circuit may be arranged along a ridge on which the target plant is planted.

According to a third aspect of the present invention, in the first aspect of the present invention, the LED elements of the LED circuit may be arranged along the stem of the target plant.

According to a fourth aspect of the present invention, in the first aspect of the present invention, the LED driving circuit may include a rectifier circuit that receives alternating current to generate a pulsating current. The alternating current is supplied to the input side of the rectifier circuit, and the LED driving current is supplied to the LED driving circuit based on a current on the output side of the rectifier circuit.

According to a fifth aspect of the present invention, in the fourth aspect of the present invention, the plurality of LED elements of the LED circuit may be connected in series to the input side of the rectifier circuit. The second period of the LED driving current, which varies in value periodically, is determined by the number of the LED elements connected in series.

According to a sixth aspect of the present invention, in the first aspect of the present invention, the plant growth lighting device may further include a DC power supply. The LED driving circuit may include a first capacitor and a second capacitor. The first capacitor and the second capacitor are each charged with direct current supplied from the DC power supply. The LED driving current is supplied to the LED circuit based on a voltage generated by serial connection of the first capacitor and the second capacitor.

According to a seventh aspect of the present invention, a plant growing device includes the plant growth lighting device according to one of the first to sixth aspects of the present invention.

### Effects of the Invention

According to the embodiment of the present invention, there can be obtained a plant growth lighting device suitable for emitting artificial light that can increase a harvest and a device and a method for growing plants using the plant growth lighting device.

### BRIEF DESCRIPTION OF THE DRAWINGS

FIG. 1 illustrates a greenhouse using a plant growth lighting device according to an embodiment of the present invention;
FIG. 2 illustrates an embodiment of the present invention where target plants are irradiated with artificial light instead of sunlight;
FIG. 3 schematically illustrates a plant growth lighting device 200 according to an embodiment of the present invention;
FIG. 4 is a cross-sectional view of the plant growth lighting device 200 taken along the line IV-IV of FIG. 3;
FIG. 5 schematically illustrates a light emitting device 152;
FIG. 6 is a cross-sectional view of the light emitting device 152 taken along the line VI-VI of FIG. 5;
FIG. 7 illustrates the circuit configuration of the plant growth lighting device 200 or the light emitting device 152 according to an embodiment of the present invention;
FIG. 8 is a graph illustrating the output current of an LED current control circuit 420;
FIG. 9 is a graph showing patterns of an LED current 460 generated by the LED current control circuit 420;
FIG. 10 is a graph showing patterns of the LED current 460 when the number of the LED elements connected in series that configure an LED circuit 352 is varied;
FIG. 11 illustrates another embodiment of the present invention;
FIG. 12 is a graph showing the waveforms of an LED current in the circuit shown in FIG. 11;
FIG. 13 is a graph showing a simulation result of the LED current 460 in the circuit shown in FIG. 7 with the value of a capacitor 436 of a stimulation level control circuit 430 as a parameter;
FIG. 14 illustrates a driving circuit 500;
FIG. 15 illustrates the configuration of the plant growth lighting device 200 or the light emitting device 152 using the driving circuit 500;
FIG. 16 illustrates operation modes of the driving circuit 500;
FIG. 17 illustrates a placement of the plant growth lighting device 200 with respect to a plant 50;
FIG. 18 illustrates a fixture for fixing the plant growth lighting device 200;
FIG. 19 illustrates a placement of the plant growth lighting device 200;
FIG. 20 is a photograph showing a growth condition of broccoli irradiated with artificial light 310 produced by the plant growth lighting device 200 in addition to sunlight according to an embodiment of the present invention;
FIG. 21 is a photograph showing a growth condition of broccoli grown with only sunlight; and
FIG. 22 is a photograph showing a growth condition of coriander irradiated with the artificial light 310, which varies in intensity, from the side in addition to sunlight and a growth condition of coriander irradiated with artificial light with a constant intensity from above in addition to sunlight.

### DESCRIPTION OF THE PREFERRED EMBODIMENTS

### 1. Introduction

Preferred embodiments of the present invention will be described hereinafter with a greenhouse application where plants are cultivated with sunlight as an example. It should be understood, however, that the present invention is not limited to this application and can be applied to cultivation only with artificial light without sunlight and that a large effect can be expected not only from applications with sunlight but also from applications with only artificial light.

### 2. Description of Plant Growing Device Equipped with Plant Growth Lighting Device according to an Embodiment of the Present Invention

### 2.1 Description of Greenhouse according to an Embodiment of the Present Invention

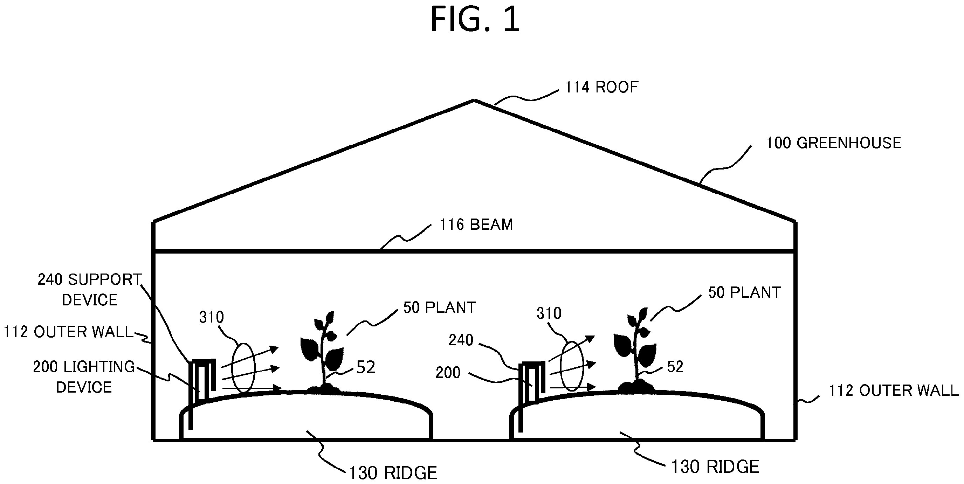

FIG. 1 illustrates a greenhouse 100 according to an embodiment of the present invention. The greenhouse 100 is disposed outdoors and houses ridges 130 for cultivating plants 50. The ridges 130 are made of plant cultivation soil, and the plants 50 are planted on the ridges 130. Sunlight necessary for the growth of the plants 50 is taken in through a roof 114.

The greenhouse 100 is provided with outer walls 112 made of a light transmissive material around the ridges 130 for growing the plants 50. The roof 114 is made of a light transmissive material and disposed so as to cover the upper portion of the outer walls 112. The greenhouse 100 is also provided with a beam 116 for fixing the outer walls 112 and connecting them to each other so as to maintain the strength to cope with winds or other conditions. Examples of the plants 50 planted on the ridges 130 include vegetables, grasses, and flowers.

A plant growth lighting device 200 according to an embodiment of the present invention is disposed on one side of each of the plants 50 and fixed by a support device 240. The plant growth lighting device 200 irradiates the plant 50 with artificial light 310 such that it illuminates around the base of the plant 50 from the side. For example, the plant growth lighting device 200 irradiates the plant 50 with the artificial light 310 from 5 a.m. to 7 p.m. The plant growth lighting device 200 may be provided on both sides of the plant 50 so as to irradiate the plant 50 with the artificial light 310 from both sides, or it may be provided on one side so that the plant 50 is irradiated with the artificial light 310 only from one side of the plant 50. In this embodiment, the ridges 130 for growing the plants 50 are made of soil such as leaf soil. However, the present invention is also applicable to the case where the plant 50 is grown in hydroponics, and the plant growth lighting device 200 may be disposed such that the plant 50 grown in hydroponics is irradiated with the artificial light 310 around its base.

The reason why the plant 50 is irradiated with the artificial light 310 emitted by the plant growth lighting device 200 in addition to sunlight taken in through the roof 114 is that this increases the diameter of the stem 52 of the plant 50 to promote the growth of the plant 50, or this helps the plant 50 to bear more buds to increase the harvest of fruit. Irradiating sunlight or artificial light to the plant 50 from above allows the plant 50 to produce more starch by photosynthesis. The increased starch production can promote the growth of the plant 50 and increase the harvest of fruit, but this is not sufficient yet. The plant 50 needs to absorb nutrients through its roots. Promoting the growth of the roots can increase the amount of nutrients absorbed through the roots, but at the same time it is necessary to increase the diameter of the stem. As described below, the stem diameter of the plant 50 was successfully increased to more than double its normal diameter by irradiating the stem with the artificial light 310 emitted by the plant growth lighting device 200 from the side. Also, a strawberry plant was successfully brought into blossom with many flowers consecutively for a long period. In cultivation of coriander, the same plant bore many sprouts consecutively. A similar result was obtained with ice plant as well.

The greenhouse 100 shown in FIG. 1 is configured to utilize both sunlight and the artificial light 310 emitted by the plant growth lighting device 200 to grow plants. However, it may be configured to irradiate the plant 50 with artificial light instead of sunlight from above and irradiate the plant 50 with the artificial light 310 emitted by the plant growth lighting device 200 from the side of the plant 50.

### 2.2 Description of Embodiment in which Target Plant is Irradiated with Artificial Light instead of Sunlight

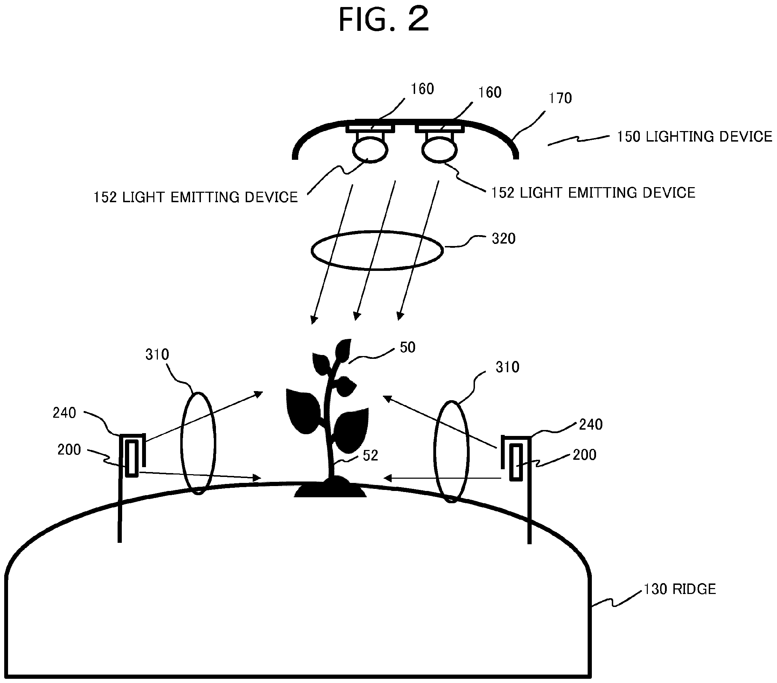

FIG. 2 illustrates an embodiment of the present invention where target plants are irradiated with artificial light instead of sunlight. The greenhouse 100 is advantageous in that sunlight can be utilized, as long as it is made of a light transmissive material. Unfortunately, however, a light transmissive material tends to easily release heat, which means high heating costs for keeping the temperature inside the greenhouse 100 higher than a given temperature when the outside air temperature is low. Utilizing artificial light 320 emitted by a lighting device 150 instead of sunlight makes it possible to cultivate the plant 50 indoors.

The lighting device 150 may have any configuration. For example, it may be configured to emit the artificial light 320 with a light emitting device 152 provided with a reflector 170. Since sunlight normally exhibits a light intensity of 30,000 lumens to 100,000 lumens, a plurality of light emitting devices 152 may be provided to increase the light intensity.

The plurality of light emitting devices 152 are fixed on the reflector 170 by a fixing device 160. Each of the light emitting devices 152 includes a plurality of LED elements, which will be described below, and emits the artificial light 320 onto the plant 50. The reflector 170 may not be provided, but it is preferable to be provided to increase the efficiency of illumination on the plant 50.

Irradiating the plant 50 with only the artificial light 320 emitted by the lighting device 150 from above promotes the tendency of the plant 50 to grow upward, while it does not significantly promote the tendency for the diameter of the stem 52 of the plant 50 to increase. Irradiating the plant 50 with the artificial light 310 emitted from the plant growth lighting device 200 can increase the diameter of the stem 52. It can also activate germination in leafy green vegetables or the like.

### 3. General Description of Lighting Device 200

### 3.1 General Description of Plant Growth Lighting Device 200

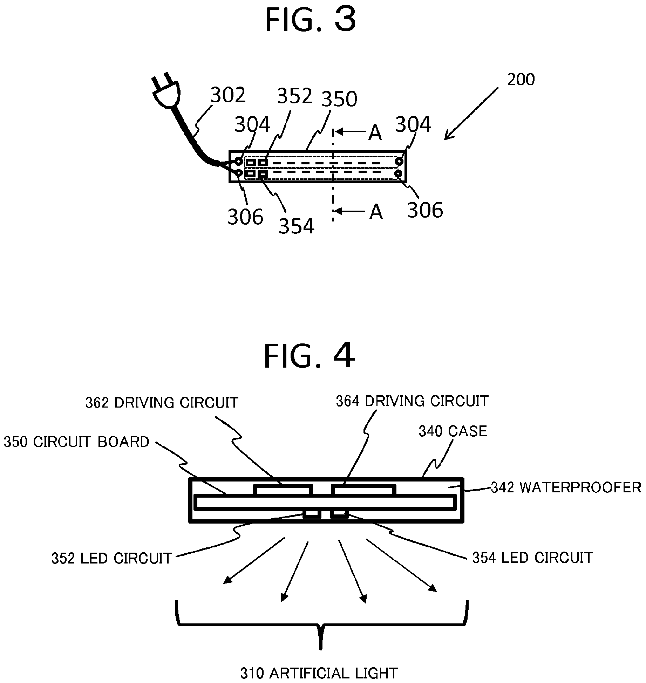

FIG. 3 schematically illustrates the plant growth lighting device 200, and FIG. 4 is a cross-sectional view of the plant growth lighting device 200 taken along the line IV-IV of FIG. 3. To avoid complexity, a case 340 is omitted in FIG. 3. The plant growth lighting device 200 includes LED circuits 352 and 354 provided on one side of a circuit board 350. Driving circuits 362 and 364 for supplying an electric current to the LED circuits 352 and 354 are provided on the other side of the circuit board 350. Via a power supply cord 302, 50 Hz or 60 Hz commercial power is supplied to power supply connecting terminals 304 and 306 of the circuit board 350. As shown in FIG. 4, the circuit board 350, the LED circuits 352 and 354, and the driving circuits 362 and 364 are housed in the case 340, which is filled with a waterproofer 342. The waterproofer 342 is a light transmissive resin that allows the light emitted by the LED circuits 352 and 354 to be released to the outside. Meanwhile, the plant growth lighting device 200 has a main body that is waterproof except its connector portion, so even if it is put into water, its electrical insulation is maintained.

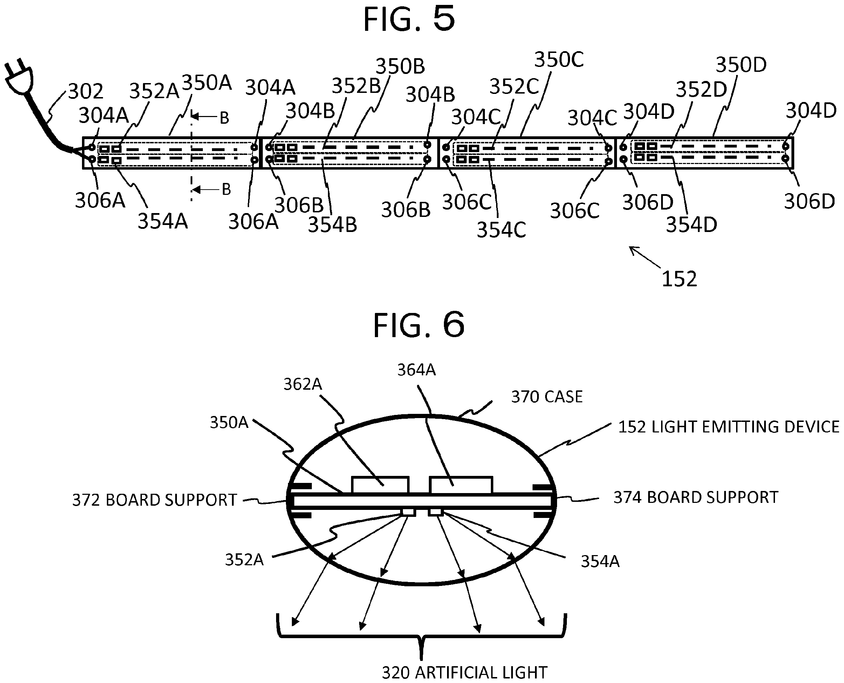

The circuit board 350 shown in FIG. 3 includes a pair of the power supply connecting terminals 304 on one side and a pair of the power supply connecting terminals 306 on the other side in the longitudinal direction. Similarly, the circuit boards 350A to 350D shown in FIG. 5, which will be described below, each include a pair of power supply connecting terminals 304A to 304D, respectively, on one side and a pair of power supply connecting terminals 306A to 306D, respectively, on the other side of each circuit board in the longitudinal direction. The power supply connecting terminals with identical reference numerals on both sides of each circuit board in the longitudinal direction are electrically connected to each other so that if one of the pair of power supply connecting terminals is supplied with power, the power supplied is transmitted to the other power supply connecting terminal. Therefore, power can be received via one of the pair of power supply connecting terminals and supplied to another circuit board via the other power supply connecting terminal.

In the embodiment shown in FIGs. 3 and 4, the board face on which the LED elements are linearly disposed is rectangular. However, the shape of the board face is not limited to this, and it may be nearly circular or nearly square.

In FIG. 2, the plant growth lighting device 200 is fixed such that the face of the circuit board 350 on which the LED elements are disposed is nearly perpendicular to the upper surface of the ridge on which the plant 50 is planted. For example, if the face of the circuit board 350 on which the LED elements are disposed is rectangular, the circuit board 350 extends along the longitudinal direction of the ridge 130, and the plurality of LED elements that configure the LED circuit 352 and LED circuit 354 are also disposed along the surface of the ridge 130. This configuration allows one unit of the plant growth lighting device 200 to irradiate the bases of a plurality of the plants 50 planted on the ridge 130.

### 3.2 Configuration of Light Emitting Device 152 of Lighting Device 150 Disposed Above Target Plant 50

In the embodiment shown in FIG. 2, the lighting device 150 is disposed above the plant 50 and configured to irradiate the plant 50 with the artificial light 320. The plant 50 may be illuminated by sunlight in addition to the artificial light 320. As described above, the lighting device 150 may not be used, with only sunlight illuminating the plant 50 from above.

The configuration of the light emitting device 152 is shown more specifically in FIGs. 5 and 6. To avoid complexity, a case 370 is omitted in FIG. 5. FIG. 6 is a cross-sectional view of the light emitting device 152 taken along the line VI-VI of FIG. 5. The circuit boards 350A to 350D provided with LED circuits 352A to 352D and LED circuits 354A to 354D, which will be described below, are disposed inside the case 370, made of a light transmissive resin. The power supply connecting terminals 304A to 304D and the power supply connecting terminals 306A to 306D of the circuit boards 350A to 350D, respectively, are supplied with power via the power supply cord 302, which allows the LED circuits 352A to 352D and the LED circuits 354A to 354D to be supplied with a driving current so that the LED elements of these LED circuits emit the artificial light 320 onto the target plant 50 via the case 370.

In FIG. 6, the circuit board 350A is fixed inside the case 370 by board supports 372 and 374. The same configuration is applied for the circuit boards 350A to 350D, and also for the above-described circuit board 350 shown in FIGs. 3 and 4. However, the configuration of the circuit boards 350 and 350A to 350D described herein is an example and not to be construed as limited to this. Also, the circuit board 350 of the plant growth lighting device 200 and the circuit boards 350A to 350D of the light emitting device 152 may be different in configuration. Herein, the circuit board 350A will be described as a representative of the circuit boards 350A to 350D.

The circuit board 350A is provided with the LED circuits 352A and 354B for emitting the artificial light 320 on one side and driving circuits 362A and 364A for driving the LED circuits 352A and 354A, respectively, on the other side. Although this circuit board 350A is provided with two LED circuits, namely, the LED circuit 352A and the LED circuit 354A, it may be provided with only one LED circuit or three or more LED circuits. By increasing the number of LED circuits, the amount of the artificial light 320 can be increased. The amount of light to be given to the target plant 50 can be increased by increasing the number of LED circuits. The amount of light to be given to the target plant 50 can also be increased by reducing the distance between the target plant 50 and the LED circuits. Also, the amount of the artificial light 320 can be increased by increasing the value of the current flowing through each LED circuit. Of course, decreasing the value of the current flowing through each LED circuit reduces the amount of the artificial light 320. This applies to the plant growth lighting device 200 described above as well.

### 3.3 Configuration of Circuit Boards 350A to 350D

FIG. 5 shows the configuration of the circuit boards 350A to 350D fixed inside the case 370. In the circuit board 350A, as one of the power supply connecting terminals 304A and one of the power supply connecting terminals 306A are supplied with power via the power supply cord 302 to operate the driving circuit 362A and the driving circuit 364A, the power is transmitted to the other of the power supply connecting terminals 304A and the other of the power supply connecting terminals 306A, respectively. By electrically connecting the other of the power supply connecting terminals 304A and the other of the power supply connecting terminals 306A with one of the power supply connecting terminals 304B and one of the power supply connecting terminals 306B, respectively, the circuit board 350B is supplied with power. Similarly, power is supplied from the circuit board 350B to the circuit board 350C, from the circuit board 350C to the circuit board 350D. Since the circuit board 350 and the circuit boards 350A to 350D each have power supply connecting terminals for receiving and transmitting power on both ends in the longitudinal direction, the number of the circuit boards used for the plant growth lighting device 200 or the light emitting device 152 can be easily selected, which is very convenient. By selecting the number of the circuit boards to be used, the amount, or intensity, of artificial light emitted from the plant growth lighting device 200 or the light emitting device 152 can be easily set or varied.

The artificial light 310 and the artificial light 320 emitted from the plant growth lighting device 200 and the lighting device 150 onto the plant 50 are used to promote processes such as photosynthesis, gemination, and flowering of the plant 50. In particular, the artificial light 310 emitted by the plant growth lighting device 200 significantly promotes germination, flowering, and other processes. Therefore, it is desirable that the artificial light 310 and the artificial light 320 include light with red and blue-purple wavelengths. It is necessary that the LED circuit 352, the LED circuit 354, the LED circuits 352A to 352D, and the LED circuits 354A to 354D have LED elements that emit light with red and blue-purple wavelengths.

### 4. Circuit Configuration of Plant Growth Lighting Device 200 and Light Emitting Device 152

### 4.1 General Description of Circuit Configuration of Plant Growth Lighting Device 200 and Light Emitting Device 152

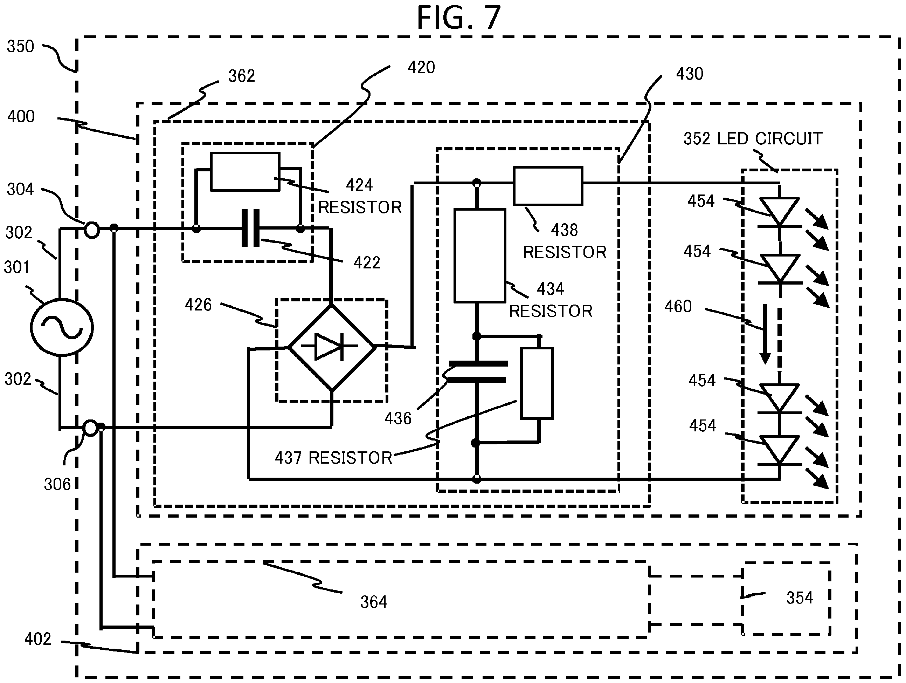

FIG. 7 illustrates the circuit configuration of the plant growth lighting device 200 and the light emitting device 152 according to an embodiment of the present invention. The plant growth lighting device 200 and the light emitting device 152 may have a different circuit configuration, but they are almost identical in basic configuration and operation in this embodiment. The circuit configuration of the plant growth lighting device 200 and the light emitting device 152 will be described hereinafter with the plant grown lighting device 200 as a representative example.

As illustrated in FIGs. 4 and 6, the circuit board 350 is provided with the LED circuits 352 and 354 on one side and the driving circuit 362 for driving the LED circuit 352 and the driving circuit 364 for driving the LED circuit 354 on the other side. The driving circuit 362 and the driving circuit 364 are identical in configuration, operation, and effect. Therefore, the configuration, operation, and effect will be described with respect to the driving circuit 362 as a representative. While the LED circuits 352 and 354 are disposed in parallel on the circuit board 350 in FIGs. 3 and 5, the circuit board 350 may include only one LED circuit, and the number of LED circuits may be determined to be one, two, or more depending on the amount of light required.

The amount, or intensity, of the artificial light 310 emitted by the plant growth lighting device 200 onto plants that perform photosynthesis is varied at low frequencies of 400 Hz or lower, for example. The same applies to the artificial light 320. The driving circuits 362 and 364 periodically vary the intensity of the LED current to be supplied to the LED elements of the LED circuits 352 and 354 utilizing the frequency of the commercial power supply. In Japan, the commercial power supply frequency is 50 Hz or 60 Hz. A 50 Hz or 60 Hz pulsating current can be obtained by half-wave rectifying commercial power. Also, a 100 Hz or 120 Hz pulsating current can be obtained by full-wave rectifying commercial power.

In the present embodiment, the amount of the artificial light 310 to be emitted onto the plant 50 is varied at low frequencies by utilizing the frequency of the commercial power supply to give moderate stimulation to the plant 50. Utilizing the frequency of the commercial power supply allows the plant growth lighting device 200 to operate at low cost and in a stable manner with a favorable effect on the cells of the plant 50. Such an operation and effect can be obtained with the light emitting device 152 of the lighting device 150.

In FIG. 7, the driving circuit 362 for supplying an LED circuit 450 with an LED current 460 for turning the LED circuit 352 ON has an LED current control circuit 420 and a rectifier circuit 426. It further has, as appropriate, a stimulation level control circuit 430 for controlling the stimulation level. The LED current control circuit 420 is a circuit that controls the value of the LED current 460 to be supplied to the LED circuit 450 and has a capacitor 422, for example. Controlling the LED current 460 by the capacitor 422 allows for control of the LED current 460 with heating of the LED current control circuit 420 itself suppressed, which is highly efficient. Moreover, it can also prevent plants from being affected by unnecessary heat. A resistor 424 configures a circuit for discharging the electric charge stored in the capacitor 422. A power switch, not shown in the figure, is provided between a commercial power supply 301 and the LED current control circuit 420 so that the LED current 460 is supplied from the LED current control circuit 420 to the LED circuit 352 via the rectifier circuit 426 with the power switch closed.

Next, when the power switch, not shown, is switched from the closed state to the open state, the supply of the LED current 460 is discontinued, turning OFF the LED circuit 352. The electric charge stored in the capacitor 422 at the time of switching the power switch, not shown, to the open state is held in the capacitor 422. This charge in the capacitor 422 should preferably be discharged immediately. The provision of the resistor 424 allows for immediate discharge of the charge stored in the capacitor 422 when the power switch, not shown, is opened. The value of the resistor 424 is appropriately 50 KΩ to 1 MΩ and preferably 100 KΩ or larger. When the value of the resistor 424 is smaller than 50 KΩ, the value of the current supplied to the LED circuit 450 via the resistor 424, not via the capacitor 422, increases, which results in an increased amount of heating of the resistor 424. An increased amount of heating of a driving circuit 410 or the LED circuit 450 causes irradiation of plants not only light but also heat, which is not preferable. By setting the value of the resistor 424 at 50 KΩ or larger, in particular 100 KΩ or larger, the value of the current supplied to the LED circuit 450 via the resistor 424 can be reduced to a very small value, thereby reducing the heating of the resistor 424.

Since the capacitor 422 produces little heat, controlling the intensity of the artificial light 310 by the capacitor 422 can reduce the influence of heat on plants irradiated with the artificial light 310.

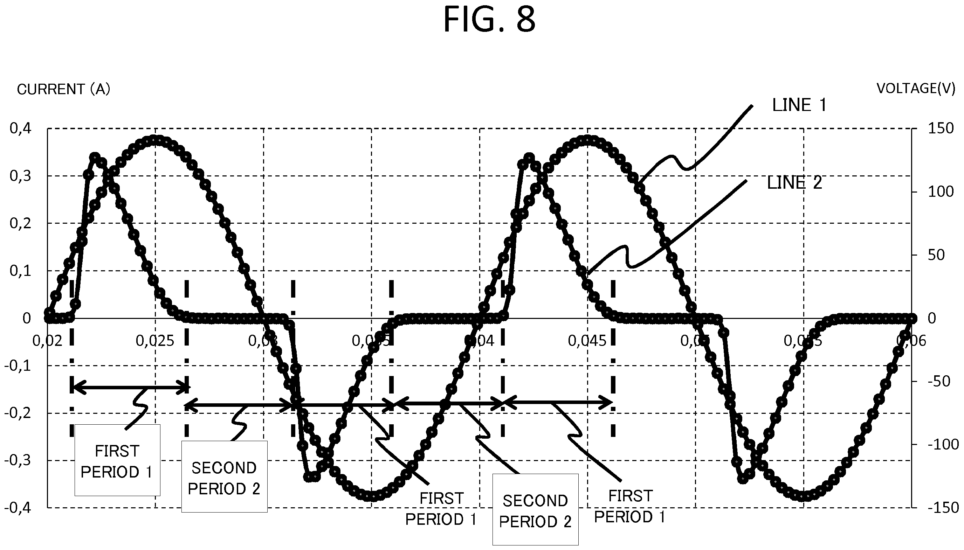

The graph in FIG. 8 shows circuit analysis simulation results obtained using a simulation program Qucs (Quite Universal Circuit Simulator). The simulation results have been confirmed to roughly match with the current value in an actual prototype. In FIG. 8, the power supply voltage supplied from the commercial power supply 301 in FIG. 7 to the LED current control circuit 420 via the power supply cord 302 is represented by line 1, and the current supplied from the LED current control circuit 420 to the rectifier circuit 426 is represented by line 2. In the circuit shown in FIG. 7, the current represented by line 2 is the power supply current supplied from the commercial power supply 301 via the power supply cord 302.

Line 2 is based on a simulation result when the commercial power supply 301 is a 100V, 50 Hz power supply, the capacitor 422 has a value of 10 µF, the rectifier circuit 426 is a full-wave rectifier circuit, and the LED circuit 450 is configured by 35 LED elements connected in series. In the simulation shown in this graph, the stimulation level control circuit 430 is not in operation. In other words, the stimulation level control circuit 430 is not provided in this simulation. In line 2, the first period 1 represents a period during which the current is flowing, and the second period 2 represents a period during which the current is not flowing. The second period 2 is increased by increasing the number of the LED elements connected in series that configure the LED circuit 450, and by using LED elements with a higher terminal voltage. As the second period 2 increases, the first period 1 decreases correspondingly. The peak value of line 2 can be varied by varying the capacity of the capacitor 422. As the capacity of the capacitor 422 increases, the peak value of line 2 increases, and conversely, as the capacity of the capacitor 422 decreases, the peak value of line 2 decreases.

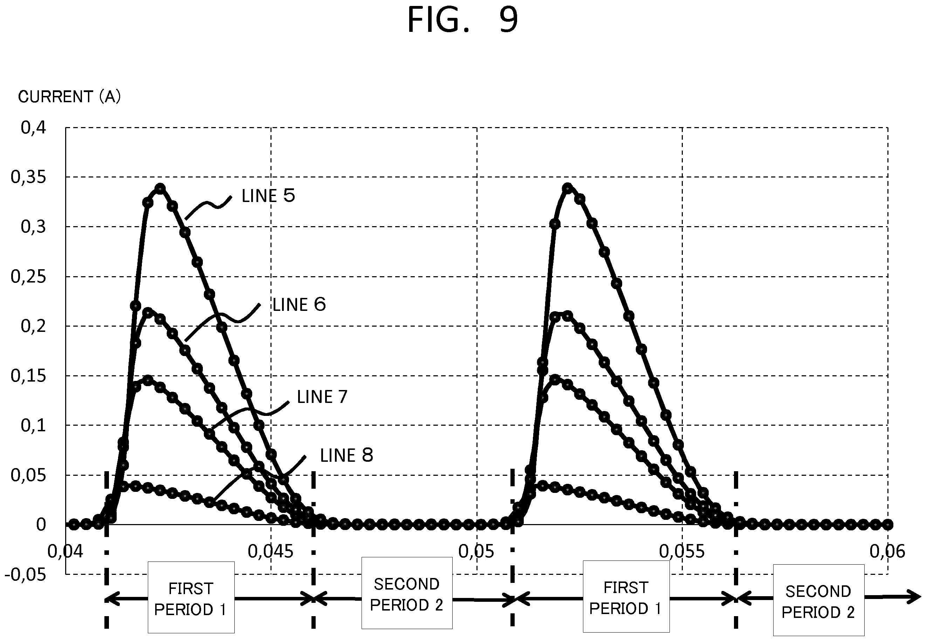

The graph in FIG. 9 shows waveforms of the LED current 460 supplied from the rectifier circuit 426 to the LED circuit 352. Based on the current represented by line 2 in FIG. 8, a current showing the waveform represented by line 5 in FIG. 9 is sent to the LED circuit 352. The LED circuit 352 is ON during the first period 1, while it is OFF during the second period 2. In other words, periods of different light intensities, or intensity patterns of the artificial light 310 produced by the LED circuit 352 can be defined by the first period 1 and the second period 2 of the LED current 460 in FIG. 9. Also, the periodicity of intensity variations of the artificial light 310 emitted by the LED circuit 352 is set based on the frequency of the commercial power supply 301. As will be described below, the ease of setting periods of different light intensities of the artificial light 310 emitted by the plant growth lighting device 200 makes the plant growth lighting device 200 simple and stable.

### 4.2 Control of Level of Stimulation to Organism by LED Current Control Circuit 420

In FIG. 9, lines 5, 6, 7, and 8 are each based on a simulation result of the LED current 460 when the capacitor 422 of the LED current control circuit 420 has a value of 10 µF, 6 µF, 4 µF, and 1 µF, respectively. In all of lines 5, 6, 7, and 8, the commercial power supply 301 has a frequency of 50 Hz, and the number of LED elements connected in series that configure the LED circuit 352 is 35.

Varying the circuit constants of the LED current control circuit 420 hardly changes the relationship between the first period 1, during which the output of the artificial light 310 from the plant growth lighting device 200 is high, and the second period 2, during which the output of the artificial light 310 is low or zero, while changing the value of the LED current 460, especially its peak value. Based on the difference between the value of the LED current 460 during the first period 1 and the value of the LED current 460 during the second period 2, an output difference of the artificial light 310 occurs, which stimulates the cells of the target plant irradiated with the artificial light 310 to activate their operations and actions.

As described above, in the graph shown in FIG. 9, increasing the value of the capacitor 422 causes the peak value of the LED current 460 to increase, thereby allowing the artificial light 310 to give the plant 50 more stimulation. If the capacity of the capacitor 422 is increased further beyond 10 µF, the stimulation can be further increased correspondingly. Setting the capacity of the capacitor 422 at 30 µF can increase the peak value of the first period 1 to around 750 mA, and setting it at 50 µF can increase the peak value to 1 A or larger. In this manner, the total amount or intensity of the artificial light 310 can be increased as well as its stimulation.

In this embodiment, the output difference between the output of the artificial light 310 during the first period 1 and the output of the artificial light 310 during the second period 2 can be varied while maintaining the relationship between the first period 1 and the second period, or the ratio between the two periods, which configures a stimulation pattern, by varying the value of the capacitor 422 of the LED current control circuit 420. This allows for easy setting to give an appropriate amount of stimulation to the plant 50 and ensures that the appropriate amount of stimulation is given to the plant 50 in a stable manner. Also, since the periodicity of the intensity pattern of the artificial light 310 is determined based on the frequency of the commercial power supply, the entire operation is stable, and a low frequency stimulation appropriate for plants can be given.

In the present embodiment, the plant 50 is irradiated with the artificial light 310 from the side, which produces an enormous effect on the plant 50, which performs photosynthesis. Compared with a growth condition that the plant 50 would be in if grown normally, receiving only sunlight, the plant 50 develops large stocks, has a larger stem diameter around its base, and produces more sprouts around its base, which results in a good harvest. In the present embodiment, the plant 50 is not simply given a constant intensity of light from the side, but it is also given stimulation by varying the amount of light irradiation at low frequencies of 300 Hz or lower so that its growth can be further promoted.

As described above, in the present embodiment, the peak value of the artificial light 310 emitted by the plant growth lighting device 200 can be easily varied by varying the value of the capacity of the capacitor 422, which is a circuit constant of the LED current control circuit 420. At the same time, the peak value of the artificial light 310 can be varied while maintaining a constant relationship, or ratio, between the first period 1, during which the artificial light 310 is strong in intensity, and the second period 2, during which the artificial light 310 is weak in intensity or not emitted. As has been seen above, according to the present embodiment, the light intensity pattern, or stimulation pattern, of the artificial light 310 emitted onto the target plant 50 can be maintained in a stable manner. This operation and effect also applies to the lighting device 150.

### 4.3 Illumination Pattern Setting 1 of Plant Growth Lighting Device 200 or Artificial Light 310

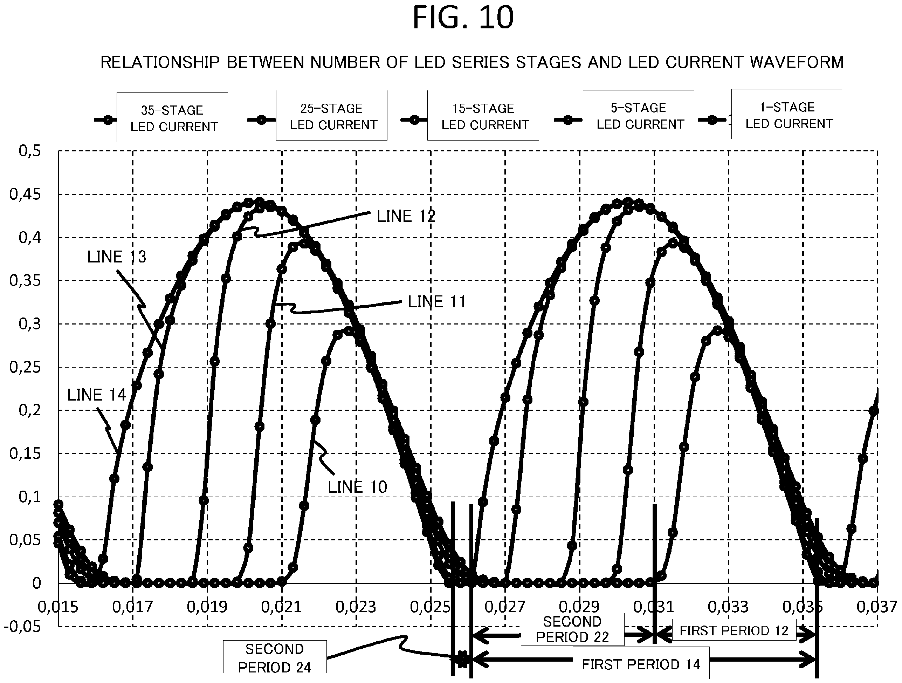

The graph shown in FIG. 10 is based on a simulation result of the LED current 460 flowing through the LED circuit 352 when the number of the LED elements connected in series that configure the LED circuit 352 is varied with a circuit constant, for example the value of the capacitor 422 of the LED current control circuit 420 shown in FIG. 7, fixed at a predetermined value, for example 10 µF. Lines 10, 11, 12, and 13 are each a waveform of the LED current 460 when the number of the LED elements connected in series that configure the LED circuit 352 is 35, 25, 15, 5 and 1, respectively.

Line 10 represents the LED current 460 flowing in a current waveform, or a current pattern where the first period 12, during which the value of the LED current 460 is larger than that of the second period 22, is short, and conversely, the second period 22, during which the LED current 460 does not flow or its value is small, is long. Since the LED elements of the lighting device 200 emit light based on the current value of this pattern, when the number of the LED elements connected in series is 35, the plant 50 is irradiated with the artificial light 310 based on this pattern from the plant growth lighting device 200. In chloroplasts of the plant 50, for example, photosynthesis is performed receiving the artificial light 310 or the artificial light 320 with the pattern of line 10. Also, the artificial light 310 and the artificial light 320 with the pattern of line 10 cause the plant 50 to produce phytohormones that promote germination and flowering.

Line 11 represents the LED current 450 when the number of the LED elements connected in series of the LED circuit 352 has been decreased to 25. In line 11, the first period is longer than the first period 12 of line 10, and conversely, the second period is shorter than the second period 22 of line 10. In line 12, where the number of the LED elements connected in series of the LED circuit 352 has been further decreased to 15, the first period is further longer, and conversely, the second period is further shorter. In line 13, where the number of the LED elements connected in series is 5, this tendency is even stronger. When the number of the LED elements connected in series is the least value of 1, as shown in line 14, the illumination period of the LED element indicated by the first period 14 is exceptionally long, and conversely, the non-illumination or little illumination period of the LED element indicated by the second period 24 is exceptionally short.

As seen from the graph of FIG. 10, increasing the number of the LED elements connected in series of the LED circuit 352 causes the LED current pattern to have a shorter first period and a longer second period. When the LED elements are connected in parallel, the first period and the second period of the LED current pattern does not change in length, although no waveforms are shown in the graph. In the circuit shown in FIG. 7, parallel connections of LED elements are omitted. However, the current pattern of the LED current 460 described above is adjustable by adjusting the number of the LED elements connected in series. This adjustment of the current pattern of the LED current 460 allows for control of the intensity pattern of the artificial light 310 or the artificial light 320 emitted by the plant growth lighting device 200 or the lighting device 150.

Increase the amount of illumination of the artificial light 310 or the artificial light 320 emitted by the plant growth lighting device 200 or the lighting device 150 to over a predetermined value requires securing a commensurate number of the LED elements of the LED circuit 450. For example, to achieve the pattern represented by line 12 with 30 LED elements, two series circuits of 15 LED elements each are provided to turn the 30 LED elements ON. The LED current 460 flowing each circuit has the wave pattern represented by line 12. In this manner, by combining series circuits and parallel circuits, a desired pattern of the LED current 460 can be achieved, which makes it possible to irradiate the target plant 50 with the artificial light 310 with a desired pattern.

The LED circuit 352 in FIG. 7 may include a plurality of parallel circuits, although not shown in the figure. Each parallel circuit preferably includes the same number of LED elements. The amount of light emitted by one LED element depends on the current flowing in the LED element. Therefore, a desired amount of light and illumination pattern can be achieved by controlling the value of the current flowing in each LED element by adjusting the constants of the LED current control circuit 420 so that each parallel circuit contains the same number of LED elements. Since the terminal voltage of each LED element tends to increase as the current flowing through it increases, in a plurality of LED element series circuits connected in parallel, the current is distributed to the series circuits in an equal amount to each other. Therefore, the risk of current deviation to one series circuit can be avoided.

### 4.4 Illumination Pattern Setting 2 of Plant Growth Lighting Device 200 or Artificial Light 310

In the circuit shown in FIG. 7, a full-wave rectifier is used as the rectifier circuit 426. Accordingly, the LED current 460 shown in FIG. 10 varies at a frequency twice that of the power supply. If the frequency of the power supply is 50 Hz, the LED current 460 in FIG. 10 repeatedly varies in intensity at a frequency of 100 Hz. If the frequency of the power supply is 60 Hz, the LED current 460 in FIG. 10 repeatedly varies in intensity at a frequency of 120 Hz.

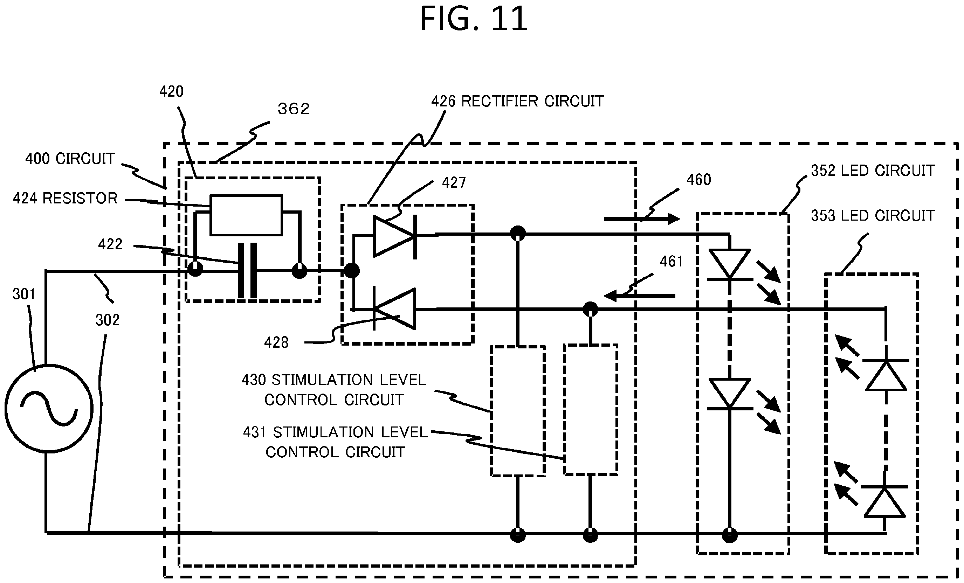

In many cases, even lower frequencies are preferable for stimulating the plant 50. In such a case, the frequency at which the LED current 460 varies in intensity can be lowered by using a half-wave rectifier for the rectifier circuit 426 in FIG. 7. FIG. 11 shows an embodiment with such a configuration. In the circuit 400 shown in FIG. 11, the amount of illumination of the artificial light 310 is controlled to vary at the frequency of the commercial power supply 301. The LED current 460 and the LED current 461, which vary in value at the frequency of the commercial power supply 301, are supplied from the driving circuit 362 to the LED circuit 352 and the LED circuit 354.

When a positive voltage is applied to the LED current control circuit 420 in one half cycle of the voltage supplied from the commercial power supply 301, the LED current 460 is supplied from the commercial power supply 301 to the LED circuit 352 via the LED current control circuit 420 and a rectifier element 427 of the rectifier circuit 426 and sent back to the commercial power supply 301. In the other half cycle, in which a negative voltage is applied to the LED current control circuit 420, the LED current 461 flows from the commercial power supply 301 to the LED circuit 354 to the rectifier element 428 of the rectifier circuit 426 to the LED current control circuit 420 and back to the commercial power supply 301. The capacitor 422 of the LED current control circuit 420 is charged in the opposite direction every half cycle of the alternating current of the commercial power supply 301. Therefore, the value of the LED current 460 or the LED current 461 is determined by the value of the capacitor 422 of the LED current control circuit 420. The resistor 424 is a circuit for discharging the electric charge stored in the capacitor 422, and the LED current 460 or the LED current 461 hardly flow through this circuit. Therefore, the resistor 424 hardly generates heat.

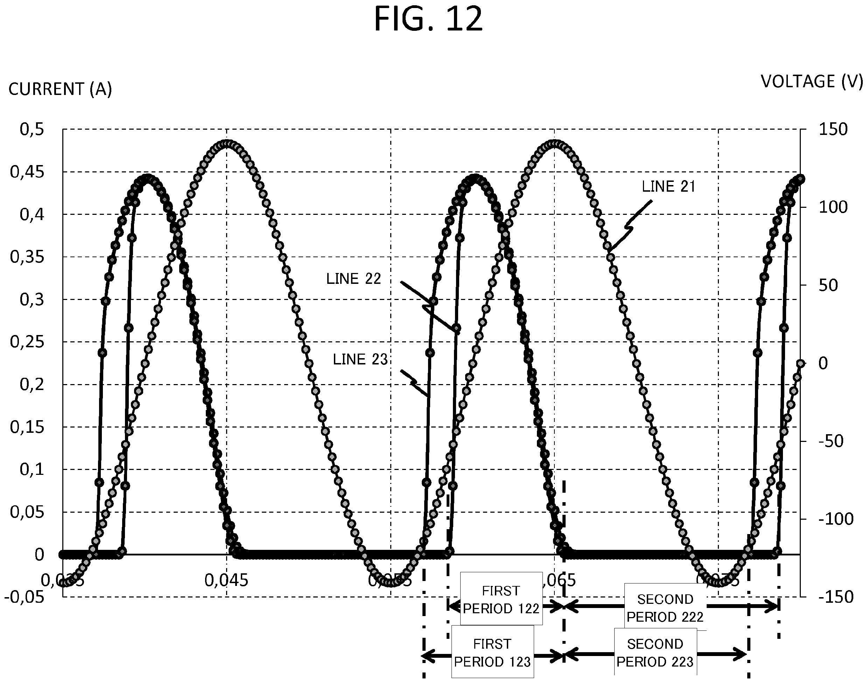

FIG. 12 shows current waveforms of the LED current 460 in the embodiment shown in FIG. 11. The LED current 461 and the LED current 460 are identical in waveform, only with the LED current 461 lagging behind the LED current 460 by one half cycle of the frequency of the commercial power supply 301. Therefore, the following description will be given using waveforms of the LED current 460 as a representative of the LED current 460 and the LED current 461.

Line 21 represents alternating voltage supplied from the commercial power supply 301. Lines 22 and 23 each represent a waveform of the LED current 460 when the number of the LED elements connected in series of the LED circuit 352 is 15 and 5, respectively. The first period 122 of line 22 is longer than the first period 123 of line 23, and conversely, the second period 222 of line 22 is shorter than the second period 223 of line 23. As is the case with the full-wave rectification described in the embodiment above, the first period, during which the current value is large, can be decreased in length, and the second period, during which the current does not flow or its value is small, can be increased in length by increasing the number of the LED elements connected in series of the LED circuit 352. Therefore, even when the frequency of the artificial light emitted by the plant growth lighting device 200 or the lighting device 150 is half-wave rectified to be equal to the power supply frequency, the intensity pattern of the artificial light 310 or the artificial light 320 can be adjusted and set by the number of the LED elements connected in series of the LED circuit 352. As described above, the same applies to the LED current 461.

### 4.5 Suppression of Electromagnetic Wave Noise Generation

Since the circuits shown in FIGs. 7 and 11 do not require any switching circuits that repeat switching operations in short cycles, electromagnetic wave noise is not generated. Therefore, there is no possibility of affecting the movement of ions or the rotation of molecular motors in photosynthesis. Photosynthesis involves the movement of various ions. Ions are charged with electricity and susceptible to an electric field, especially electromagnetic wave noise. When chloroplasts are irradiated with electromagnetic wave noise, electric field oscillations occur based on the electromagnetic wave frequency, which is likely to adversely affect ions such as hydrogen ions in the process of photosynthesis. Electromagnetic wave noise can have a detrimental effect on the Calvin cycle, which is used to synthesize starch. In the embodiment above, there are no such effects because the rectifier circuit 426 is used to convert alternating current into a pulsating current, and no switching circuits that generate electromagnetic waves are used.

### 4.6 Operation of Stimulation Level Control Circuit 430

In the circuit shown in FIG. 7, the stimulation level control circuit 430 is provided, and in the circuit shown in FIG. 11, the stimulation level control circuit 430 and the stimulation level control circuit 431 are provided. The graphs shown in FIGs. 8, 9, 10, and 12 show waveforms of the LED current 460 or the LED current 461 when the stimulation level control circuit 430 or the stimulation level control circuit 431 is not in operation. In these waveforms, the current for operating the LED elements is not flowing during the second period. Therefore, the LED elements are OFF during the second period. As a result, the plant 50, irradiated with the artificial light 310, receives strong stimulation. Depending on the kind of the plant 50, the stimulation can be too strong. Also, even the plant 50 of the same kind, a leaf of the same plant 50 for example, can have a different state of photosynthesis depending on which stage of growth it is in, such as the sprouting stage and the vegetative stage. Therefore, there are cases where it is preferable to control the stimulation level of the artificial light 310 or the artificial light 320 emitted by the plant growth lighting device 200 or the lighting device 150.

FIG. 7 shows an example of the stimulation level control circuit 430. The stimulation level control circuit 430 and the stimulation level control circuit 431 are basically the same with the same operation and effect. For example, the stimulation level control circuit 430 in FIG. 7 has a capacitor 436 and resistors 434 and 438 for controlling the variation of the LED current 460 flowing in the LED circuit 352. The resistor 437 is a resistor configuring a discharging circuit for discharging the electric charge stored in the capacitor 436 at a predetermined time constant to prevent the electric charge stored in the capacitor 436 from being held for a long period.

The resistor 438 is optional, but it allows more electric charge to be stored in the capacitor 436, enhancing the stimulation level control effect for the same amount of capacity of the capacitor 436. It also suppresses the inrush current that flows at the moment when the voltage of the commercial power supply 301 is applied to the circuit 400. The resistor 434 suppresses the inrush current that flows into the capacitor 436 with no electric charge stored in the capacitor 436, and the electric charge stored in the capacitor 436 determines the time constant of the current supplied to the LED circuit 450.

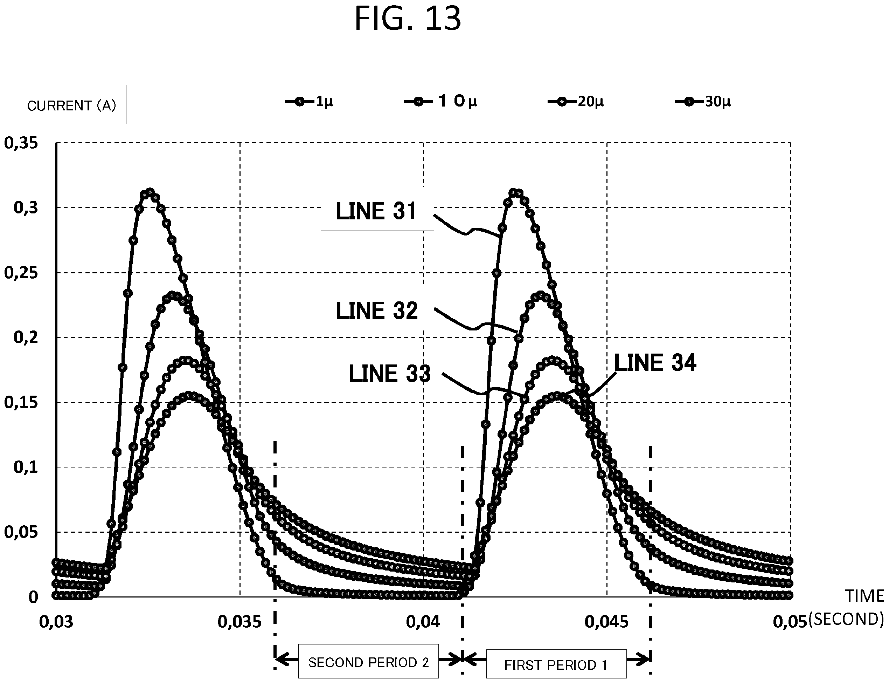

In the circuit shown in FIG. 7, the commercial power supply 301 has a voltage of 100 V and a frequency of 50 Hz; the capacitor 422 has a capacitance of 10 µF; the resistors 434 and 438, configuring the stimulation level control circuit 430, each have a resistance of 10 Ω. Also, the number of the LED elements connected in series of the LED circuit 352 is 35. FIG. 13 shows a simulation result of the LED current 460 when the capacity of the capacitor 436 of the stimulation level control circuit 430 is varied.

Lines 31, 32, 33, and 34 of FIG. 13 are each a waveform of the LED current 460 when the capacity of the capacitor 436 is 1 µF, 10 µF, 20 µF, and 30 µF, respectively. As the capacity of the capacitor 436 increases, the difference in currency value between the first period 1 and the second period 2 decreases, and as a result, the variation difference in amount of the artificial light 310 emitted by the plant growth lighting device 200 decreases. Therefore, the amount of stimulation given to the plant 50, irradiated with the artificial light 310, decreases. If the capacity of the capacitor 436 is further increased, for example, to 50 µF, the peak value of the first period 1 becomes 130 mA, and the lowest value of the second period 2 becomes 40 mA, further decreasing the difference in amount of the artificial light 310 between the first period 1 and the second period 2. In other words, the stimulation given becomes weaker.

Although the operation and effect of the stimulation level control circuit 430 shown in FIG. 7 has been described above as a representative, the stimulation level control circuits 430 and 431 shown in FIG. 11 are the same as this in configuration, operation, and effect.

In the circuit shown in FIG. 7 or FIG. 11, the relationship between the first period 1, during which the value of the LED current 460 is large, and the second period 2, during which the value of the LED current 460 is small, does not change, which allows for extremely easy control of the amount of stimulation in every embodiment described in the present specification. In other words, among the elements of the stimulation to be given to the target plant 50, the frequency can be set by the power supply frequency and the rectification type, and the relationship between the first period 1, during which the stimulation is strong, and the second period 2, during which the stimulation is weak, can be set by the number of the LED elements 454 connected in series. Moreover, the intensity of stimulation can be set by the stimulation level control circuit 430. As seen above, in all of the embodiments including the present embodiment, the elements related to the stimulation can be set individually, which allows for extremely easy control of the stimulation to be given to target organisms, especially plants.

### 5. Another Embodiment

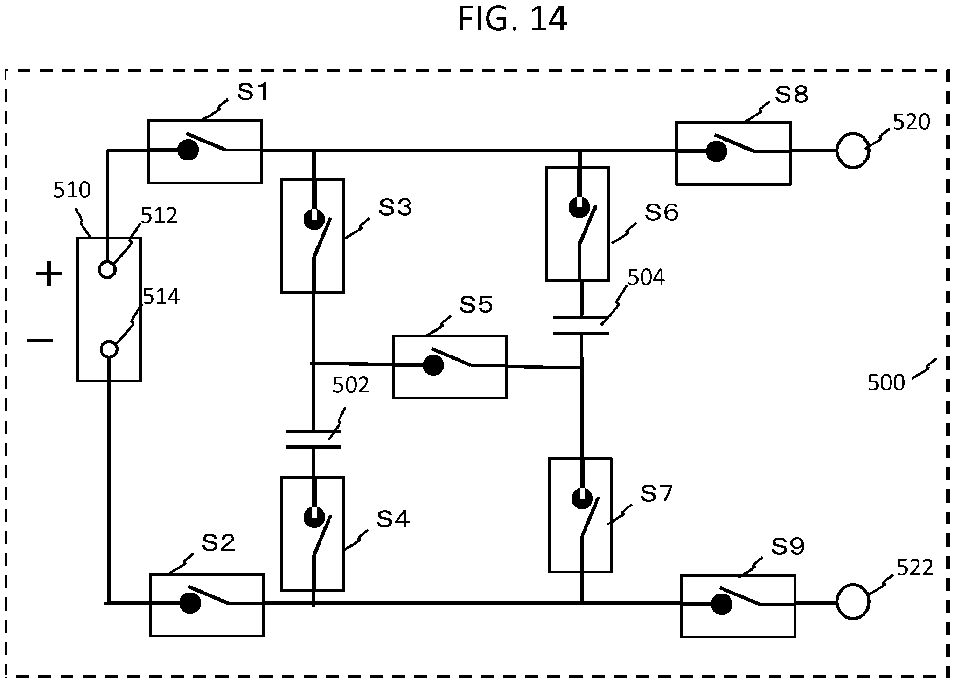

The configuration of the plant growth lighting device 200 in another embodiment of the present invention will be described hereinafter with reference to FIGs. 14, 15, and 16. In this embodiment, the plant growth lighting device 200 includes a driving circuit 500 instead of the driving circuit 362 or the driving circuit 364. While the driving circuit 362 above outputs a current varying periodically based on the electric power supplied from the commercial power supply 301, the driving circuit 500 shown in FIG. 14 outputs a current varying periodically receiving direct current from a DC power supply 510 such as a secondary battery. Generally, secondary batteries or the like tend to have a low output voltage, which should preferably be boosted for use to drive the LED circuit 352 and the LED circuit 354. Unfortunately, a booster circuit using an inductance is not efficient, so the driving circuit 500, outputting a current varying periodically, has a boosting function. The operation of the driving circuit 500 will be described below specifically.

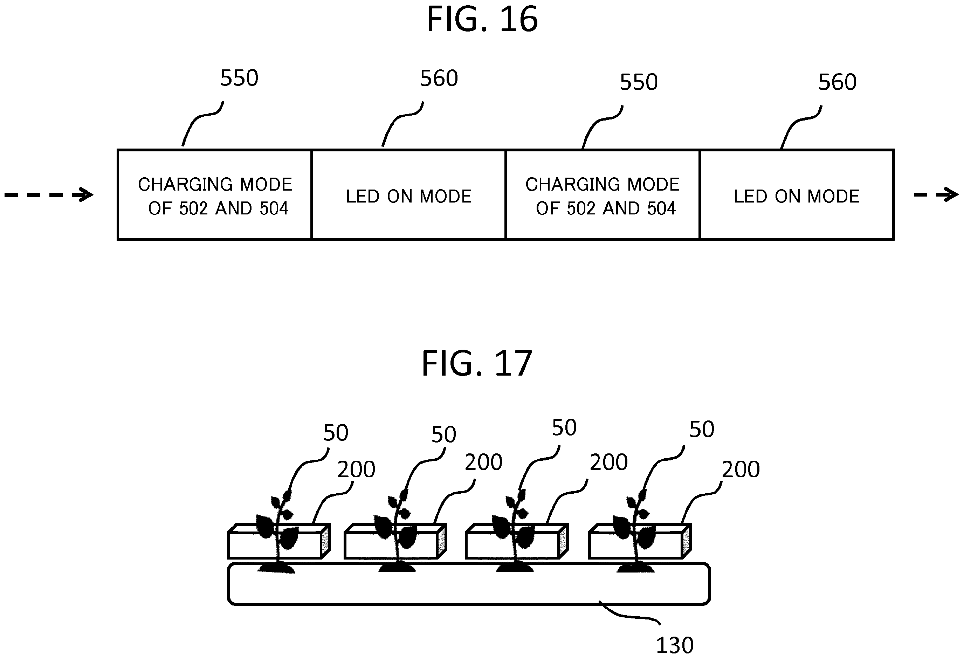

The driving circuit 500 has two basic operation modes 550 and 560 shown in FIG. 16. It outputs a driving current with a periodically varying value while boosting the voltage by alternately repeating the operation mode 550 and the operation mode 560.

In the operation mode 550, the switches S1, S2, S3, S4, S6, and S7 shown in FIG. 14 are controlled to be in the closed state, while the switches 5, 8, and 9 are controlled to be in the open state. As a result, the capacitor 502 and the capacitor 504 are each connected in parallel between the positive terminal 512 and the negative terminal 514 of the DC power supply 510. The capacitor 502 and the capacitor 504 are charged with power by the DC power supply 510. In this state, the current supply from the output terminal 520 and the output terminal 522 of the driving circuit 500 is suspended.

In the following operation mode 560, the switches S1, S2, S3, and S7 are controlled to be in the open state, while the switches 4, 5, 6, 8, and 9 are controlled to be in the closed state. As a result, the capacitor 502 and the capacitor 504 are connected in series to the output terminal 520 and the output terminal 522. Therefore, the current is supplied from the output terminal 520 and the output terminal 522 based on the voltage accompanied by the series connection of the capacitor 502 and the capacitor 504.

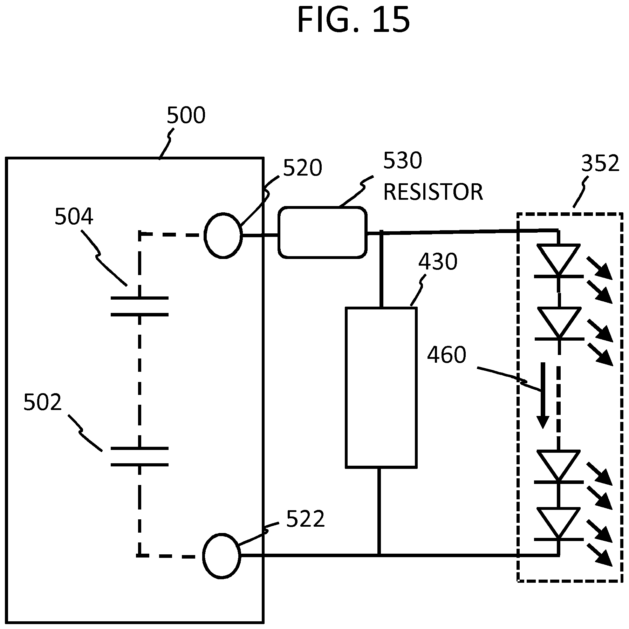

FIG. 15 shows the circuit configuration of the plant growth lighting device 200 or the lighting device 150 including the driving circuit 500. As is the case with FIG. 7, a periodically interrupted current is output from the output terminal 520 and the output terminal 522 of the driving circuit 500. The resistor 530 is a protection resistor. The stimulation level control circuit 430 has been described above, the details of which are as shown in FIG. 7. When the capacity of the capacitor 436 in the stimulation level control circuit 430 is exceptionally small, the output current of the driving circuit 500 flows into the LED circuit 352 as the LED current 460. When the capacity of the capacitor 436 is large, the variation of the current from the driving circuit 500 is suppressed, resulting in a suppressed variation width of the LED current 460, as already mentioned above. With the circuit configuration illustrated in FIGs. 14 to 16, the plant growth lighting device 200 or the lighting device 150 can be turned ON using the DC current 510. Operating the plant growth lighting device 200 or the lighting device 150 by power stored in the DC power supply 510 using a solar power generation device allows for environmentally friendly plant cultivation.

### 6. Placement of Plant Growth Lighting Device 200

FIG. 17 illustrates a placement of the plant growth lighting device 200. In the description above, the plant 50 is planted on the ridge 130. Generally, the ridge 130 is made of soil for plant cultivation. However, the present invention is exceptionally effective also as a horticultural device or a horticultural lighting device for plants grown in hydroponics and other methods using non-soil materials instead of soil. Therefore, the ridge 130 should be construed as not limited to soil but as a horticultural device such as a cultivation solution. In the case where the plants 50 are planted along the longitudinal direction of the ridge 130, and the light-emitting surface of the plant growth lighting device 200 from which the artificial light 310 is emitted has a rectangular shape, the plant growth lighting device 200 is placed beside the plant 50 such that the longitudinal direction of the rectangular shape is along the longitudinal direction of the ridge 130. By placing the plant growth lighting device 200 at a lower position than the top of the plant 50, the base of the plant 50 can be irradiated with the artificial light 310 so that the stem or the stock of the plant 50 can be increased in diameter, resulting in an increased harvest.

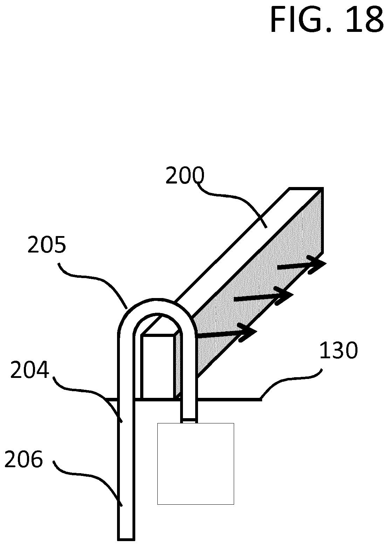

FIG. 18 illustrates a fixture for fixing the plant growth lighting device 200. It shows an example where the plant growth lighting device 200 is fixed by a fixture 204, which corresponds to the support device 240. The fixture 204 has an insertion portion 206 to be stuck into the ridge 130 and a support portion 205 for supporting the plant growth lighting device 200 by sandwiching it. The plant growth lighting device 200, placed along the ridge 130, can be fixed by the support portion 205 of the fixture 204 with the insertion portion 206 inserted into the ridge 130, resulting in an improvement in workability.

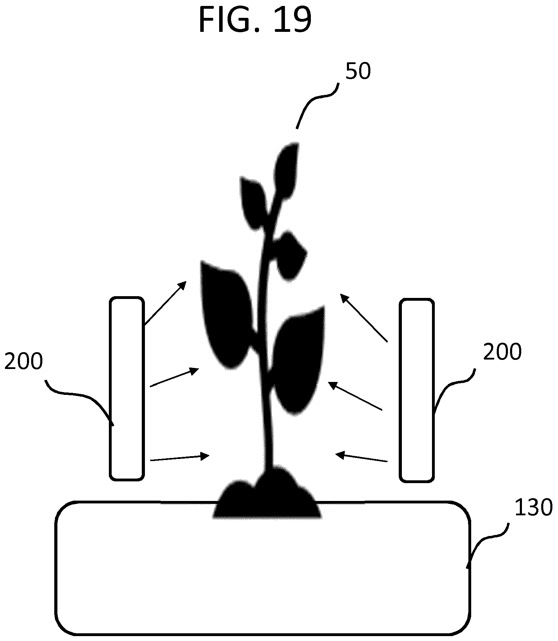

FIG. 19 illustrates a placement of the plant growth lighting device 200 for plants that grow tall, such as the tomato, the pea, and other vining plants. In the case where the light-emitting surface of the plant growth lighting device 200 from which the artificial light 310 is emitted has a rectangular shape, the plant growth lighting device 200 is placed such that the longitudinal direction of the rectangular shape is along the stem 52 of the plant 50 or along the direction of vine elongation. This placement allows the stem 52 or the vine of the plant 50 to be irradiated with the artificial light 310 of the plant growth lighting device 200. It has been experimentally demonstrated that irradiating the stem 52 or the vine with the artificial light 310, which periodically varies in intensity, increases the diameter of the stem 52 or the vine.

### 7. Comparison of Growth Conditions

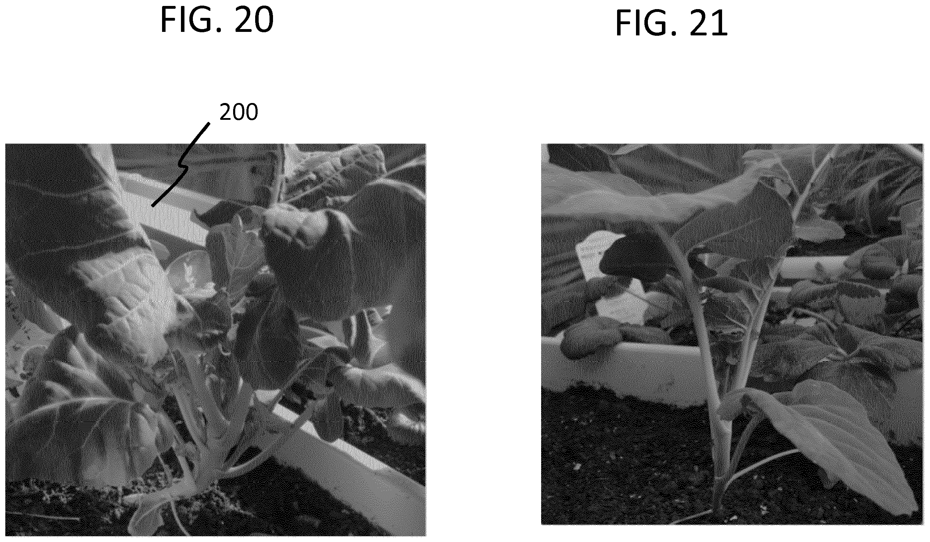

FIG. 20 shows a growth condition of broccoli whose base irradiated with the artificial light 310 from the plant growth lighting device 200 in addition to sunlight. FIG. 21 shows a growth condition of broccoli grown with only sunlight. The same commercially available vegetable cultivation soil is used for both. Also, the atmospheric temperature conditions are the same. The intensity of sunlight varies according to the weather condition, ranging from 20,000 to 100,000 lux at leaves. The intensity of the artificial light 310 from the plant growth lighting device 200 is about 10,000 lux at stems and varies in brightness periodically at 100 Hz.

The broccoli in FIG. 20 and the broccoli in FIG. 21 are each about one month after a tiny seedling was planted. The broccoli in FIG. 20, irradiated with the artificial light 310 from the plant growth lighting device 200, has an exceptionally large stem diameter, which is considered to allow the plant to vigorously draw nutrients, resulting in an increased harvest.

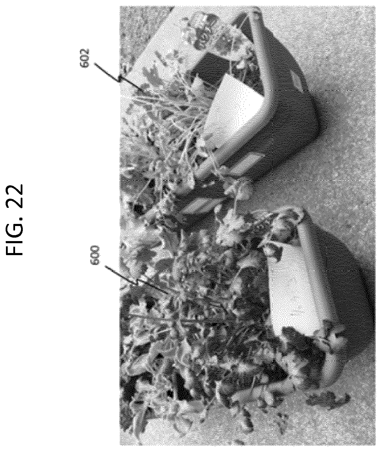

FIG. 22 shows on the left a growth condition of coriander 600 that has been grown with its base irradiated with the artificial light 310 that varies in intensity at 100 Hz from the plant growth lighting device 200 in addition to sunlight from above.

FIG. 22 also shows on the right a growth condition of coriander 602 that was planted on the same day as the coriander 600 and has been grown irradiated with artificial light with a constant intensity from above in addition to sunlight from above.

Obviously, the coriander 600 on the left is in a better condition. Also, a professional cook compared the tastes of the coriander 600 and the coriander 602 and judged that the coriander 600 tasted far better. A similar result was obtained for ice plant and other plants as well. Also, in strawberry cultivation, 7 stocks out of 8 stocks grown with their bases irradiated with the artificial light 310 boar flower buds and entered a flowering stage even at low temperatures for strawberry cultivation. It has been found that a plant develops large leaves but bears less flower buds when irradiated with artificial light that does not vary in intensity from above. Considering the fact that the plant growth lighting device 200 generates little heat, it is thought that as many as 7 stocks out of 8 stocks boar flower buds because of the effect of the artificial light 310, not heat radiation.

### List of Reference Signs

- 50: PLANT
- 52: STEM
- 100: GREENHOUSE
- 112: OUTER WALL
- 114: ROOF
- 116: BEAM
- 130: RIDGE
- 150: LIGHTING DEVICE
- 152: LIGHT EMITTING DEVICE
- 200: LIGHTING DEVICE
- 240: SUPPORT DEVICE
- 301: COMMERCIAL POWER SUPPLY
- 302: POWER SUPPLY CHORD
- 304: POWER SUPPLY CONNECTING TERMINAL
- 306: POWER SUPPLY CONNECTING TERMINAL
- 310: ARTIFICIAL LIGHT
- 320: ARTIFICIAL LIGHT
- 340: CASE
- 342: WATERPROOFER
- 350: CIRCUIT BOARD
- 352: LED CIRCUIT
- 354: LED CIRCUIT
- 362: DRIVING CIRCUIT
- 364: DRIVING CIRCUIT
- 370: CASE
- 372: BOARD SUPPORT
- 374: BOARD SUPPORT
- 420: LED CURRENT CONTROL CIRCUIT
- 430: STIMULATION LEVEL CONTROL CIRCUIT
- 500: DRIVING CIRCUIT
- 520: OUTPUT TERMINAL
- 522: OUTPUT TERMINAL

## Claims

1. A plant growth lighting device that irradiates a target plant with an artificial light from a side of the target plant, the plant growth lighting device comprising:
an LED circuit having a plurality of LED elements that emit the artificial light; and
an LED driving circuit that supplies an LED driving current to the LED circuit, the LED driving current varying in current value periodically, the LED driving current having a large value during a first period, the LED driving current having a small value or not flowing during a second period,
wherein the artificial light varies in intensity periodically according to the LED driving current.

2. The plant growth lighting device according to claim 1,
wherein the target plant is planted on a ridge, and
wherein the LED elements of the LED circuit are arranged along the ridge.

3. The plant growth lighting device according to claim 1,
wherein the target plant comprises a stem; and
wherein the LED elements of the LED circuit are arranged along the stem of the target plant.

4. The plant growth lighting device according to claim 1,
wherein the LED driving circuit comprises a rectifier circuit that receives alternating current to generate a pulsating current, the rectifier circuit comprising an input side and an output side;
wherein the alternating current is supplied to the input side of the rectifier circuit; and
wherein the LED driving current is supplied to the LED driving circuit based on a current on the output side of the rectifier circuit.

5. The plant growth lighting device according to claim 4,
wherein the plurality of LED elements of the LED circuit are connected in series to the input side of the rectifier circuit; and
wherein the second period of the LED driving current is determined by the number of the LED elements connected in series.

6. The plant growth lighting device according to claim 1,
wherein the plant growth lighting device further comprises a DC power supply;
wherein the LED driving circuit comprises a first capacitor and a second capacitor;
wherein the first capacitor and the second capacitor are each charged with direct current supplied from the DC power supply; and
wherein the LED driving current is supplied to the LED circuit based on a voltage generated by a serial connection of the first capacitor and the second capacitor.

7. A plant growing device comprising the plant growth lighting device according to any one of claims 1 to 6.
